# EUROPEAN PATENT APPLICATION

(11) **EP 3 907 692 A1**
(43) Date of publication of application: **10.11.2021**
(21) Application number: 19907445.1
(22) Date of filing: 18.09.2019
(51) Int. Cl.: G06Q 50/02

(54) **FARM MANAGEMENT SYSTEM AND MANAGEMENT METHOD THEREOF**

(30) Priority: 04.01.2019 CN 201910007339
(71) Applicant: FJ Dynamics Technology Co., Ltd, Xiangyang, Hubei 441100 (CN)
(72) Inventor: YAO, Yuan, Xiangzhou District Xiangyang, Hubei 441100 (CN); XIA, Tan, Xiangzhou District Xiangyang, Hubei 441100 (CN); QI, Jiayuan, Xiangzhou District Xiangyang, Hubei 441100 (CN)
(74) Representative: Zaboliene, Reda
(86) International application number: PCT/CN2019/106396
(87) International publication number: WO 2020/140480

(57) **Abstract**

A farm management system and a management method thereof, wherein the management method includes the following steps: step 801: dividing a leasable arable land (110) of a farm (100) into at least one leased area (201); step 802: integrating the arable land needs of one or more customers for crops to form at least one farm (100) leased arable land allocation plan; step 803: selecting the lease area (201) of the farm (100) for at least one crop planted by the customer; step 804: managing the customer's lease of farmland and managing the customer's crops; and step 805: paying fees to the farm manager.

## Description

### TECHNICAL FIELD

The disclosure relates to the field of agricultural production management, in particular to a farm management system and management method thereof.

### BACKGROUND

With the development of modern agriculture, more and more types of crops can be planted across regions and grow counter-season under controlled planting conditions, providing people with fresh crops in different seasons and regions. Therefore, farm managers can choose to plant suitable crops according to the predicted future needs of crops to increase the income of farm crops.

For farm operators, they may choose to plant crops based on current forecasts, but there are uncertainties in the planting process. For example, due to the weather, droughts and floods, a harvest may not be guaranteed. At the same time, since there are many factors affecting the market demands for crops. After the crops are harvested, demands for seeds may be small. For farm production personnel, long-term hard work may not be sustainable.

At present, for farm managers, in order to facilitate the production and management of the farm, the same type of crops on a large area is usually planted, and no other types of crops are planted. Such planting managements make the farm's single agricultural product more critical, increase planting risks, and lower the utilization rate of arable land. All these events can reduce the overall income of the farm.

With the increasing urbanization process, fewer and fewer people own arable land, and it may be difficult for those who actually demand agricultural products to grow the crops according to their needs. In recent years, as food safety problems have become more and more serious, more and more people, especially those living in cities, hope to obtain their crops under specific requirements, such as crop varieties, whether to use pesticides, fertilizers, agricultural conditions, the use of machinery. For people who do not own arable land, such as white-collar workers, even if they rent farm land to grow crops, they may found it difficult to find the time and energy to manage crops.

### SUMMARY OF THE DISCLOSURE

One of the main advantages of the present disclosure is to provide a farm management system and management method thereof, wherein the farm management system manages the cultivation of the arable land of the farm according to the type of the arable land of the farm, and improves the planting utilization rate of the arable land of the farm.

Another advantage of the present disclosure is to provide a farm management system and a management method thereof, wherein the farm management system manages the types of crops grown on the farm according to the needs of users (lease customers) and reduces the planting risks of the farm managers.

Another advantage of the present disclosure is to provide a farm management system and a management method thereof, wherein the farm management system integrates one or more user needs, and allocates land according to the user needs, thereby increasing the income of the farm manager.

Another advantage of the present disclosure is to provide a farm management system and management method thereof, wherein the farm management system allows farm managers to plant crops suitable for current customers according to the actual needs of customers, reducing the risk of imbalance between supply and demand when crops are harvested.

Another advantage of the present disclosure is to provide a farm management system and management method thereof, wherein the farm management system allows farm managers to plant predetermined types of crops according to the actual needs of customers. In other words, customers can rent farmland through the farm management system, and grow crops that are privately customized.

Another advantage of the present disclosure is to provide a farm management system and a management method thereof, wherein the farm management system allocates farmland in a balanced manner according to the farming needs of multiple customers, reduces the vacancy rate of farm land, and improves the utilization rate of farmland.

Another advantage of the present disclosure is to provide a farm management system and management method thereof, wherein the farm management system divides one or more planting areas according to the type of arable land of the current farm, and planting suitable crops to suitable crops based on the production requirements of the crop-planting areas to increase crop yields.

Another advantage of the present disclosure is to provide a farm management system and management method thereof, wherein the farm management system can integrate the needs of one or more users based on the size of the planting area of the current farm and the planting needs of users, (such as planting crops) area size, lease time, planting types, etc.) To improve the utilization rate of farmland.

Another advantage of the present disclosure is to provide a farm management system and management method thereof, wherein the farm management system provides customers with at least one planting plan based on the type of arable land and the growth requirements of at least one crop, which improves the utilization rate of arable land at the same time, improve the profitability of crops which are grown.

Another advantage of the present disclosure is to provide a farm management system and a management method thereof, wherein the farm management system manages the types of crops grown on the leased arable land based on the customer's planting requirements, and meets the customer's requirements for crop planting varieties.

Another advantage of the present disclosure is to provide a farm management system and a management method thereof, wherein the farm management system manages the current customer leased farmland to grow crops based on the customer's planting management requirements. For example, weeding, fertilization, and other types of crop management to meet customers' needs for the quality of crops.

Another advantage of the present disclosure is to provide a farm management system and a management method thereof, wherein the farm management system integrates the planting needs of multiple customers according to the type of arable land, and plant types of crops according to the type of arable land, so as to improve the overall yield of the customer's crops.

Other advantages and features of the present disclosure are fully embodied by the following detailed description and can be realized by the combination of means and devices specifically pointed out in the appended claims.

According to one aspect of the present disclosure, a farm management method of the present disclosure that can achieve the foregoing objectives and other objectives and advantages, wherein the management method includes the following method steps:
(a) integrating at least one customer's demand for leasing arable land to form at least one allocation plan for leased arable land of the farm; and
(b) matching at least one leased area of the farm to at least one crop that the customer needs to plant, to be suitable for the crop to be arable in the leased area.

According to an embodiment of the present disclosure, before the step (a), the management method further comprises the step of: dividing a leasable arable land of a farm into at least one leased area.

According to an embodiment of the present disclosure, in the above method, arable land information of the farm is acquired, and the leased area of the farm is divided according to type of arable land of the farm.

According to an embodiment of the present disclosure, in the above method, the farm is constructed to divide the leased area of the farm, wherein the leased area is at least suitable for growing at least one crop.

According to an embodiment of the present disclosure, in the step (a), it further includes:

obtaining demand of the customer for renting farmland, wherein the lease demanded comprises the area of the leasable farmland, period of lease, and the types of crops to be planted; and

integrating needs of multiple customers for the leased farmland and analyzing the customer's crop planting plan according to the farmland information of the leased area of the farm.

According to an embodiment of the present disclosure, in the step (b), allocating the crops of the customer's needs to plant in the leased area of the farm.

According to an embodiment of the present disclosure, in the step (b), selecting the leased area of the farm to suit the customer's needs for planting crops.

According to an embodiment of the present disclosure, the management method further includes the steps:
(c) managing customer lease farmland and managing crops grown by customers; and
(d) Paying fees to farm manager.

According to an embodiment of the present disclosure, the step (c) further includes:
(c.1) cultivating the crops designated by the customer to the customer leased farmland area;
(c.2) feeding back information as to growth of crops to the farm manager or the customers, the customers and the farm manager managing the growth of crops; and
(c.3) harvesting corresponding crops in customer leased area.

According to an embodiment of the present disclosure, the step (d) further includes:
paying fees of renting farmland and farm management fees to the farm manager; and
deducting the crops harvested in the leased area to pay for farmland lease.

According to another aspect of the present disclosure, the present disclosure further provides a farm management system, including:

A farm area management module, wherein the farm area management module provides at least one leased area formed after a farm is divided; and

A farmland lease module, wherein the farmland lease module integrates at least one leased arable land demand, combined with the arable land type of the leased area into which the farm is currently divided, and selecting the leased area to meet the crop planting needs of the leased arable land.

According to an embodiment of the present disclosure, wherein the farm area management module receives arable land information of the farm, and plans the leased area according to the arable land information; or constructs the farm to receive planned lease area after the farm is constructed.

According to an embodiment of the present disclosure, the farm area management module further includes:

An area division module, wherein the area division module divides the lease area according to arable land information of the farm, wherein the lease area is suitable for cultivation of at least one crop; and

An area cultivation management module, wherein the area cultivation management module records the types of crops grown arable in each lease area of the farm.

According to an embodiment of the present disclosure, the farmland leasing module further includes:

A lease information acquisition module, wherein the lease information acquisition module acquires leased arable land information of the customer, wherein the leased arable land information comprises the lease period, the leased arable land area, and the type of crops grown;

An information integration module, wherein the information integration module integrates the leased farmland information acquired by the lease information acquisition module based on farm farmland information, and derives at least one leased farmland plan; and

A farmland selection module, wherein the farmland selection module selects at least one leased area for crops according to the leased arable land plan of the information integration module.

According to an embodiment of the present disclosure, wherein the information integration module combines the lease information acquired by the lease information acquisition module, analyzes the growing period of the crops, the lease arable land area and the planting matching relationship between the crops, to obtain leased farmland plan.

According to an embodiment of the present disclosure, wherein the farmland selection module further comprises a farmland allocation module and a farmland selection module, wherein the farmland allocation module allocates the leased arable land according to the customer's leased planting needs, wherein the farmland selection module allows the customer to select the leased area in the farm.

According to an embodiment of the present disclosure, wherein the farm management system further comprises a crop management module, wherein the crop management module assists in managing the crops of the farm.

According to an embodiment of the present disclosure, wherein the crop management module further comprises an information feedback module, wherein the information feedback module feeds back information as to crop planting and growth information to the farm manager or the customers, and the customers learn about the current crops growth, and manage the growth of crops.

According to an embodiment of the present disclosure, wherein the crop management module further comprises a payment module, wherein the customer who leases the farmland pays fees to the farm manager through the payment module.

According to an embodiment of the present disclosure, wherein the payment module further comprises an expense payment module and an expense deduction module, wherein the fee payment module allows the lease customer to pay the lease fee to the farm manager, wherein the expense deduction module allows the customers to deduct expenses by paying for the crops.

Through the understanding of the following description and drawings, the further objectives and advantages of the present disclosure will be fully embodied.

These and other objectives, features and advantages of the present disclosure are fully embodied by the following detailed description, drawings and claims.

### BRIEF DESCRIPTION OF THE DRAWINGS

FIG. 1 is a schematic diagram of a farm management system managing a farm lease according to an embodiment of the present disclosure.
FIG. 2A is a schematic diagram of an alternative implementation of dividing land by the farm management system according to the above-mentioned preferred embodiment of the present disclosure.
FIG. 2B is a schematic diagram of another alternative implementation of dividing the land by the farm management system according to the above-mentioned preferred embodiment of the present disclosure.
FIG. 3A is a schematic diagram of a scenario in which the farm management system specifies and distributes crops to be planted according to the above-mentioned preferred embodiment of the present disclosure.
FIG. 3B is a schematic diagram of another scenario in which the farm management system specifies and distributes crops for planting according to the above-mentioned preferred embodiment of the present disclosure.
FIG. 3C is a schematic diagram of another scenario where the farm management system specifies and distributes crops for planting according to the above-mentioned preferred embodiment of the present disclosure.
FIG. 4 is a schematic diagram of the farm management system managing the state of the farm according to the above-mentioned preferred embodiment of the present disclosure.
FIG. 5 is a schematic diagram of the management of the farm management system according to an embodiment of the present disclosure.
FIG. 6 is a schematic diagram of system framework of the farm management system according to the embodiment of FIG. 5 of the present disclosure.
FIG. 7 is a block diagram of a land leasing method of the farm management system according to the embodiment of FIG. 5 of the present disclosure.
FIG. 8 is a farm management flowchart of a method for systematizing the farm management according to the embodiment of FIG. 5 of the present disclosure.
FIG. 9 is a schematic diagram of a lease payment method of the farm management system according to the embodiment of FIG. 5 of the present disclosure.

### DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not depart from the spirit and scope of the present disclosure.

Those skilled in the art should understand that, in the disclosure of the present disclosure, the terms "longitudinal", "lateral", "upper", "lower", "front", "rear", "left", "right", the orientation or positional relationship indicated by "vertical", "horizontal", "top", "bottom", "inner", "outer", etc. are based on the orientation or positional relationship shown in the drawings, which is only for the convenience of describing the present disclosure and to simplify the description, rather than indicating or implying that the device or element referred to must have a specific orientation, or be constructed and operated in a specific orientation, so the above terms should not be understood as limiting the present disclosure.

It can be understood that the term "a" should be understood as "at least one" or "one or more", that is, in one embodiment, the number of an element may be one, and in another embodiment, the number of the elements can be more than one, and the term "one" cannot be taken as a restriction on the number.

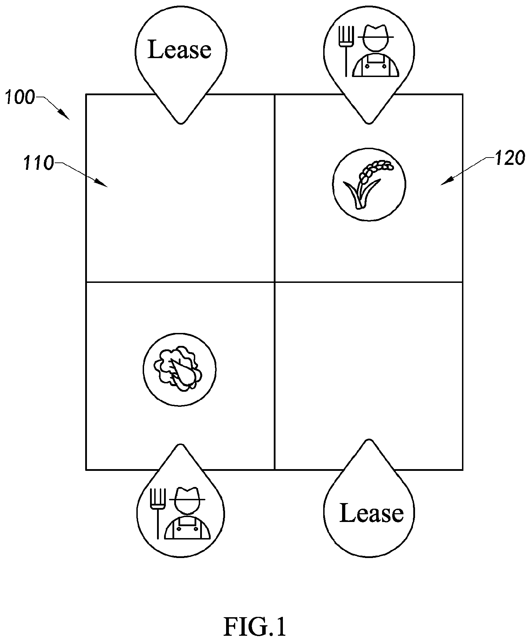

Referring to FIG. 1 to FIG. 4 of the accompanying drawings of the specification of the present disclosure, a farm management system and a management method of the farm management system according to an embodiment of the present disclosure are explained in the following description. Farm owners, farm managers, and farm operators (for the sake of explanation, collectively referred to as farm managers hereinafter), lease all or part of the farmland through the farm management system. Customers or renters take a lease of the arable land of the farm manager through the farm management system, and choose to plant appropriate crops according to their current planting needs. The farm manager measures the current leasable arable land on the farm, such as the area of the leasable land in the current farm, the types of crops that can be grown on the land, the leasable period, and the content of various elements in the soil.

As shown in FIG. 1, at least one leasable arable land 110 of a farm 100 refers to arable land that can be leased out by the farm manager. The leasable arable land 110 not only refers to land where no crops are grown, but also includes arable land used to grow crops. Correspondingly, the farm may also include non-leased land 120, such as arable land where crops are being produced. It is understandable that the arable land of the farm may change with time and with the progress of lease transactions. The non-leasable land 120 of which a lease has expired will be transformed into the leasable arable land 110. Preferably, once the leasable arable land 110 is leased, it cannot be leased to others as leasable land for the same crop for a period of time. The farm management system calculates and manages the use and status of the leasable arable land 110 and the non-leasable land 120 according to the lease plan of the farm 100.

The leasable arable land 110 of the farm 100 may be divided into one or more farming areas based on various factors such as the current arable land type, soil area, leasable period, types of crops that can be grown, and elements present in the soil. Farm manager can cultivate corresponding types of crops in a timely manner according to the type of the farming area of the leasable arable land 110.

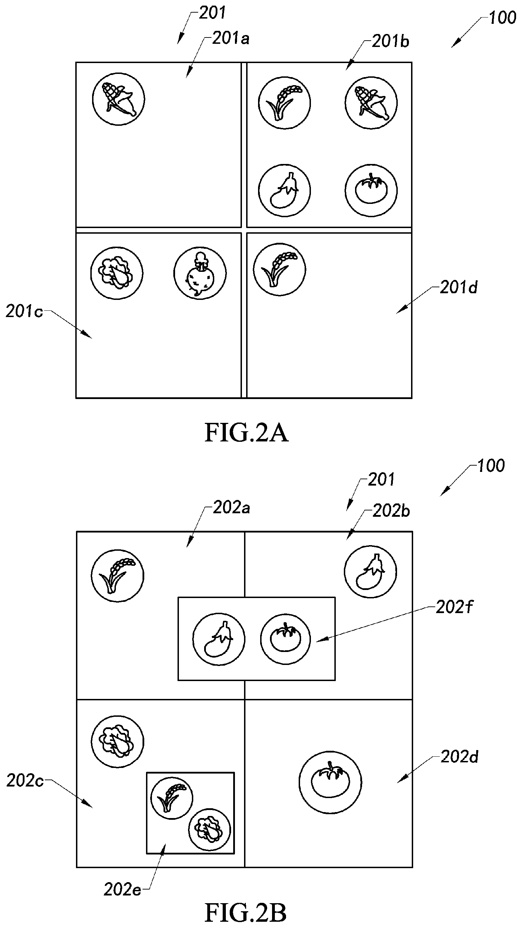

As shown in FIG. 2A, the farm management system obtains land information, lease information, and current crop planting conditions of the leasable arable land 110 of the farm, and divides the leasable arable land 110 of the current farm into at least one lease area 201. The lease area 201 includes lease areas 201a, 201b, 201c, 201d, etc. It is understandable that, the leasable arable land 110 of the farm 100 may divide the leasable arable land 110 into a plurality of lease areas 201 according to the topography, location, arable area, or land type. The lease area 201 of the farm 100 can be used to grow at least one crop. For example, the arable land in the agreed lease area 201 can be used to cultivate food crops, such as crop A and crop B, and can also be used for cultivating vegetables, such as crop C, crop D, etc.

As shown in FIG. 2B, the farm management system obtains land information, lease information, and current crop planting conditions of the leasable arable land 110 of the farm, and another alternative way of dividing the leasable arable land 110. The farm management system divides the current leasable arable land 110 of the farm 100 into at least one lease area 202, where the lease area 202 further includes lease areas 202a, 202b, 202c, and 202d. It is understandable that, the farm management system divides the current leasable area 110 based on the demand for crops. When dividing the leasable area 110, each part of the leasable area 110 can be used to plant at least one crop. The lease area 202 corresponding to different types of crops can overlap another overlap, that is, the same leasable area 110 can be planted with more than one crop at the same farming time. As shown in FIG. 2B, the overlapping parts of the lease areas 202a and 202b can be used to grow crops suitable for planting in the lease area 202a, and can also be used to grow crops suitable for planting in the lease area 202b.

It is worth mentioning that, the boundary of the lease area 201 and the lease area 202 of the farm 100 and the size and shape of the lease area are merely exemplary here, not an actual description of the real farm. Therefore, those skilled in the art can understand that, the boundary of the farm 100 and the shape and size of the arable land area are determined according to actual conditions and are not to be limited here.

Those skilled in the art can understand that the area division of the leasable arable land 110 can be performed by current farm managers. For example, the farm manager can plan the current farm arable land to adapt to the cultivation of specific crops. The farm manager divides or reconstructs the farm 100 artificially into one or more lease areas 201. For example, in order to adapt to the growth habits of crops in different seasons, the farm manager constructs a specific crop, or more than one. Preferably, the area of the leasable arable land 110 is divided according to the adaptability of crop planting and growth. The farm management system can obtain the regional division information of the current leasable arable land 110 of the farm 100 by the farm manager, so that the customer of the leased arable land can select suitable planting arable land area based on the information of the leasable arable land 110 of the farm 100.

One or more renters or customers lease part or all of the leasable arable land 110 of the farm 100. The farm management system matches the planting area of the crops according to the customer's planting requirements, such as the types of crops to be planted, the lease period, the lease area, etc., combined with the current land conditions of the leasable arable land 110 of the farm 100; or the farm management system can be based on the customer's planting needs and combined with the leasable arable land 110 of the current farm 100, matching the leasable arable land 110 of the farm suitable for planting current crops to the customer's planting needs. In short, the arable land resources of the farm 100 are integrated to solve the farming needs of customers, and the arable land of the farm 100 is leased.

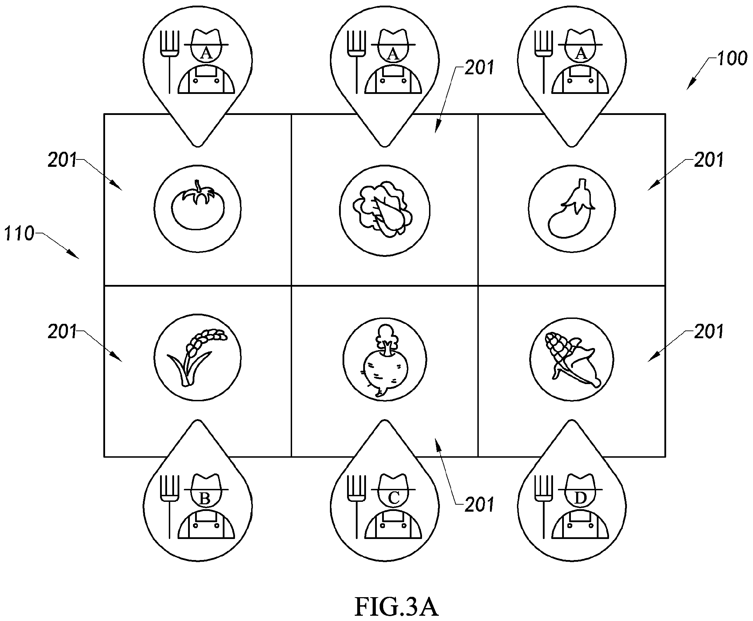

As shown in FIGS. 3A to 3C, based on the information of the leasable arable land 110 of the current farm 100 and the demand of the customer for arable land, the farm management system matches the customer's needs with suitable leasable arable land. The customer can provide the farm management system with information such as the size of the arable land required to lease the arable land, the lease period, and the types of crops to be planted according to their own needs. The farm management system can select at least one lease area 201 or lease area 202 in the leasable arable land 110 for the crops of the client according to the farmland lease requirements of the customer; or the customer can select the at least one leased area 201 or leased area 202 of the farm 100 through the farm management system.

As shown in FIG. 3A, multiple customers, such as customer A, customer B, customer C, and customer D lease part of the leasable arable land 110 in the farm 100 according to their own planting needs. The farm management system integrates the rental requirements of multiple customers, and selects suitable rental planting areas for the customers according to the customer's rental farming requirements; or the customer selects the farm 100 of the area of the leasable arable land 110 through the farm management system based on his own rental farming requirements. Customer A, Customer B, Customer C, and Customer D respectively choose according to their own rental farming area requirements or the farm management system selects the customer's crops to at least one of the lease area 201 and lease area 202. It is worth mentioning that the customer cultivates suitable crops in the leased area selected or matched; or the farm management system grows and manages crops for the current customer. Each customer can plant one or more crops in the lease area 201 of the currently leased farm 100.

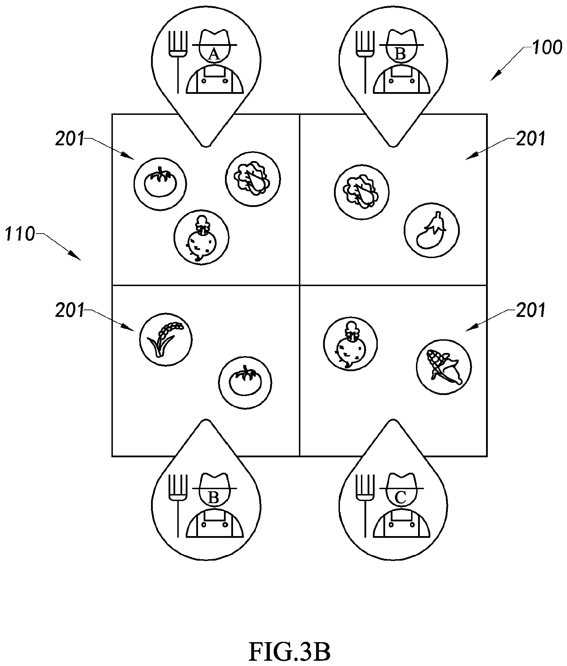

As shown in FIG. 3B, the farm management system integrates the arable areas and types of crops for lease cultivation of multiple customers, and selects at least one lease area 201 of the farm 100 as at least one lease customer to satisfy the customer's lease demand. It is mentioned that the types of crops that can be grown in the adjacent lease area 201 of the farm 100 are different. For example, customer A chooses to plant crop A in the lease area 201a, customer B chooses to plant crop A or optional crop B in the lease area 201a, and plant crop B or crops in a lease area 201b C. In short, the farm management system allows two or more customers to plant one or more crops in the same lease area 201.

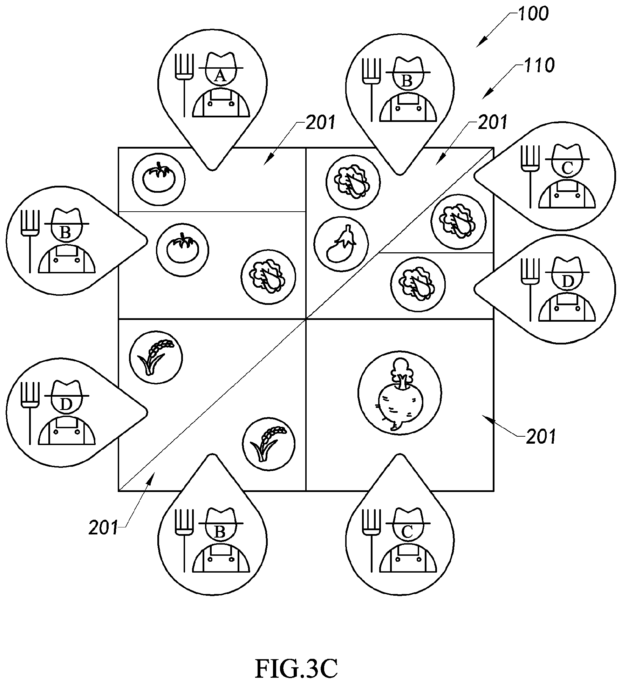

As shown in FIG. 3C, the farm management system integrates the rental farming needs of multiple customers, and plants the same farming needs of multiple customers in the same lease area 201 of the farm 100. For example, the multiple customers are customer A, customer B, customer C, and customer D, and the multiple customers have a common lease farming demand, that is, each wishes to cultivate the same crops, which are crop A, crop B, and crop C. The farm management system is based on the current common planting needs of multiple customers, and the common planting needs of current customers are planted in the same area of the farm 100, so as to manage the growth of crops in the process of planting management. That is, the planting requirements of the multiple customers for the same crop A are planted in a lease area 201a after being integrated by the farm management system, wherein the crop B is planted in a lease area 201b.

It is understandable that the farm management system receives the leased planting needs of customers, integrates the crop planting needs of one or more customers, and selects the farm 100 according to the customer's demand for planting area and crop planting types. The appropriate area of the lease area 201 is allocated to the corresponding customer to meet the customer's demand for leased farming and to resolve the farmland cultivation of the farm. According to the arable area of the leased arable land and the types of crops to be planted, the farm management system matches the arable land with a suitable area size and suitable for cultivating the crop varieties for the current customer to meet the current customer's demand for the leased arable land for planting crops. The farm management system allocates the leasable arable land 110 of the farm 100 to one or more customers according to the lease time, leased area and planting types of the leased crops, so that the leasable arable land 110 of the farm 100 can be leased by customers to a greatest extent, which improves the income of farm owners.

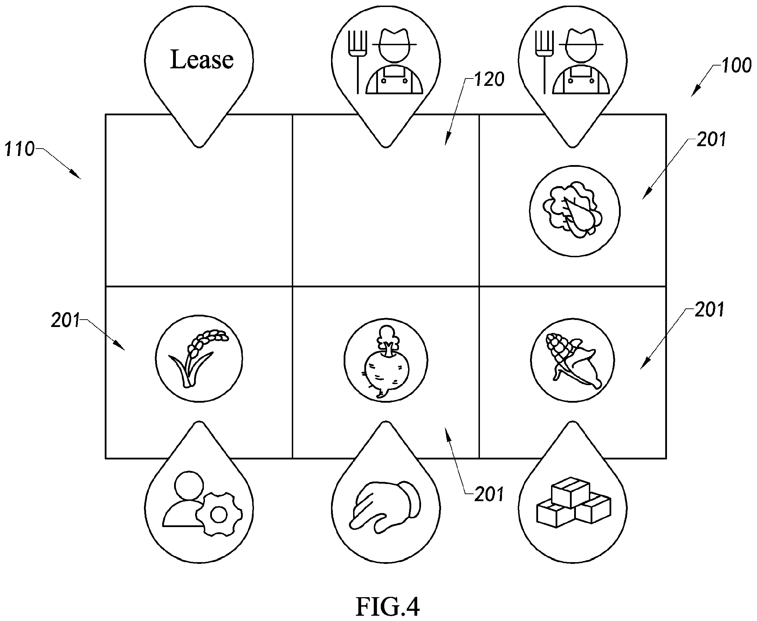

As shown in FIG. 4, the farm management system calculates and manages the lease time of the customer planted in the farm 100 and the planting time of the current crops. Different types of crops have different cultivation time and different maturity growth time. The farm management system manages the customer's lease time so that it can be leased after the lease expires, so as to avoid farmland being vacant long-term. The growth status of the crops in the different regions of the farm 100 is different, for example, the growth status of the crops, the product to be harvested, the farm to be leased, the farm to be leased, the arable land to be sown, and so on. The customer can select a suitable leased farming land, choose a suitable farming time, or prepare for farming through the display status of the farm 100 in the farm management system.

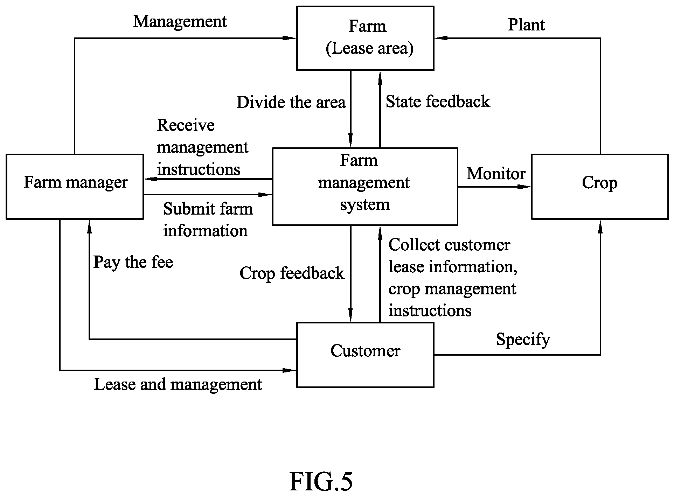

As shown in Figures 5 to 9 of the accompanying drawings of the specification of the present disclosure, the farm management system manages the arable land in the farm 100, provides suitable leased arable land to meet customer needs, manages the growth of crops in the farm 100, and manages payments from customers and farm managers. The customer leases the arable land in the farm 100 of the farm manager through the farm management system, where the farm manager charges the customer for renting the arable land and allows the customer to use the arable land of the farm 100. For the leased farmland, customers can freely manage the crops, such as the cultivation, growth management, and harvesting of crops; or the current farm management system assigns the corresponding staff or makes the operating equipment to manage the arable land and crops; or the farm manager of the farm 100 manages the arable land of the current farm 100 after accepting the corresponding management task. During the cultivation process and subsequent farmland management processes, the farm management system allows customers to plant and manage crops on leased farmland according to their own needs.

The farm management staff collects the customer's rental fee by renting the arable land of the farm 100. In addition, it can also receive operating instructions for managing crops sent by customers or by the farm management system, and collect remuneration for labor by completing crop planting, growth management, and harvesting. Correspondingly, the customer leases the arable land of the farm 100 in order to grow the crop products he wants. During the lease period, the customers can manage the planting, growth, and harvesting of crops on the current farm by themselves or by the method assigned by the system according to actual needs, and obtain the crops they want after the crops are received. It is understandable that the customers can grow their own customized agricultural products through the farm management system according to their own needs.

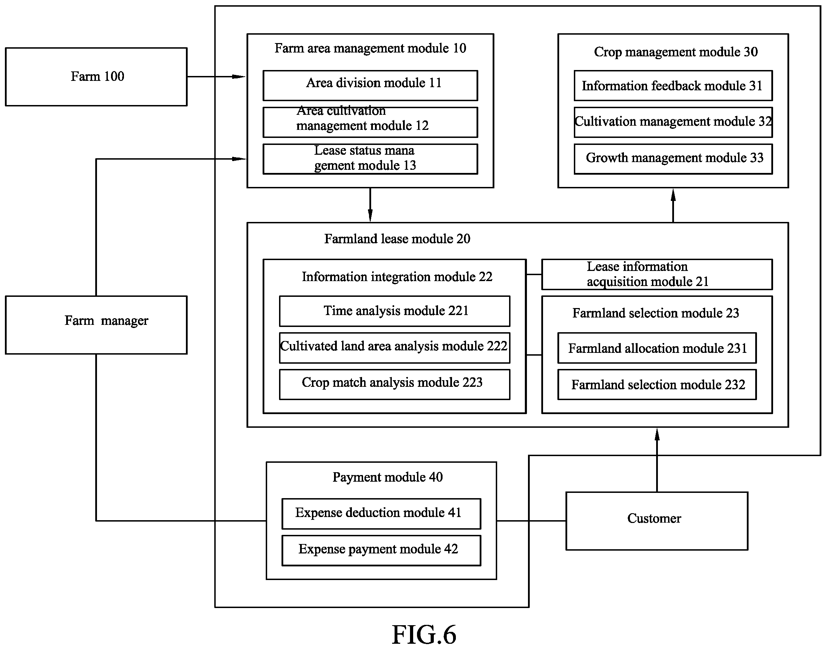

As shown in Figure 6, the farm management system includes a farm area management module 10, a farmland lease module 20, a crop management module 30, and a payment module 40, wherein the farm area management module 10 provides one or more lease areas 201 or lease areas 202 formed after the leasable arable land 110 of the current farm 100 is divided based on the lease information of the current farm 100 provided by the farm manager. The farmland lease module 20 selects suitable farming areas in the farm 100 for the current customer based on the crop farming lease information applied or provided by the customer; or the current customer selects suitable farmland based on the rentable information of the farm 100. The crop management module 30 manages the crops in the lease area 201 or 202 leased by the customer, such as farming operations, growth management, and crop receipt. The customer pays the cost of using arable land of the leased farm to the management personnel of the farm through the payment module 40, and pays the management fee required during the growth of the leased land, etc.

In detail, the farm area management module 10 of the farm management system divides the leasable arable land 110 of the farm 100 into one or more lease areas 201, and the farm area management module 10 counts the information of arable crops, cultivation time, lease period, lease customer information, and lease area in each lease area 201. In other words, the farm area management module 10 records the data information of the current farm 100 and the crops arable in the farm 100.

Correspondingly, the farm area management module 10 further includes an area division module 11, an area cultivation management module 12, and a lease status management module 13. The area division module 11 divides the farm according to the farm data information provided by the farm manager of the farm 100; or the farm manager of the farm 100 provides information as to the divided farm to the area division module 11, divides the leasable arable land 110 of the farm 100 by the area division module 11 according to the type of crop cultivation, the cultivation time, etc. The area cultivation management module 12 records the types of crops that can be arable in each lease area 201 of the farm 100 currently, and information as to cultivation management of the crops.

It is worth mentioning that the farmland lease module 20 selects farmland areas suitable for the growth of crops for customers according to the crop cultivation information of the farming area 201 recorded in the area cultivation management module 12. The lease status management module 13 records and manages status data of each lease area 201 in the farm 100. For example, the crop planting status, arable land status, lease status, etc. of the current lease area 201.

As shown in FIG. 6, the farmland lease module 20 obtains information of the customer's leased farmland and the types of crops that are expected to be arable, and selects suitable land for customers according to the type of arable land on the current farm, to be suitable for cultivating the crops selected by the customer. The farmland lease module 20 further includes a lease information acquisition module 21, an information integration module 22, and a farmland selection module 23, wherein the lease information acquisition module 21 acquires lease information from the customers, wherein the lease information includes the size of leased arable land, the lease period of arable land, and the types of crops to be planted. The information integration module 22 integrates the lease information of multiple customers based on the lease information acquired by the lease information acquisition module 21, so as to obtain a suitable leased farmland allocation plan. The farmland selection module 23 of the farmland lease module 20 selects suitable rentable arable land for the current customer.

The information integration module 22 calculates the lease information of multiple customers acquired by the lease information acquisition module 21, to analyze and obtain a reasonable lease plan, which can not only provide reasonable use of farm land, but also satisfy the customer's demand for lease of arable land. Correspondingly, the information integration module 22 further includes a time analysis module 221, an arable land area analysis module 222, and a crop match analysis module 223. The time analysis module 221 is based on factors such as the lease period of the customer, the cultivation time of the crops, and the growth time of the crops. The time analysis module 221 preferentially integrates the crops of the same planting period and the same planting time to form a leased land allocation plan. The arable land area analysis module 222 integrates the lease applications of multiple customers, and calculates an allocation plan for the customers according to the size of the leased area, so as to maximize the use of rentable arable land of the current farm. The crop match analysis module 223 analyzes the crop type information in the customer's lease application, and calculates the crop planting plan in the lease area according to the crop planting type provided by the customer. In other words, the crop match analysis module 223 analyzes the planting position, planting ratio and other issues of the crops, so as to improve the output and recovery rate of the crops of the customer.

The farmland selection module 23 further includes a farmland allocation module 231 and a farmland selection module 232, wherein the farmland allocation module 231 allocates the customer's crops to a specific lease area in the farm 100 according to the customer's rental needs. The farmland selection module 232 allows the user to select the rentable area of the farm 100, and select information such as the size and lease time of the rented arable land.

It is worth mentioning that the farmland allocation module 231 of the farmland selection module 23 allocates a reasonable planting plan to customers according to the arable land allocation plan obtained after the integration of the information integration module 22, to maximize the use of the arable land on the farm.

It is understandable that, after the farmland lease module 20 provides the customer with a lease farming solution according to the customer's farming requirements, the customer pays the farm owner or farm manager the lease fee through the payment module 40.

As shown in FIG. 6, the crop management module 30 assists a farm manager or customer to manage crops in the leasable arable land 110 in the farm 100. In detail, the crop management module 30 assists in crop planting, growth management, and crop harvesting. The crop management module 30 further includes an information feedback module 31, a cultivation management module 32, a growth management module 33, and a harvest management module 34. The cultivation management module 32 manages the types, planting methods, planting time, etc. of the crops that need to be planted in the leased land. The customers can provide or select suitable crop seeds according to their needs, and farm managers or other personnel can operate and cultivate the crop seeds. In other words, during the planting stage of crops, the customers can plant the varieties of crops they choose or provide according to their own needs. The growth management module 33 manages the nutrient supply, weeding, and insecticide of the crops during the growth process. The customers can timely send request instructions through the growth management module 33 according to the planting requirements of the crops, and the farm manager can manage the growth of the crops in the farm according to the instructions of the growth management module 33. It is worth mentioning that, through the growth management module 33, customers can select the chemicals used in the process of crop growth, such as the type of fertilizer, the amount of use, and the type of pesticide used. The harvest management module 34 manages the harvest of the crops in the leased land, and when the crops mature, the harvest management module 34 assists in harvesting the crops, and saves the result of the harvest of the crops.

It is worth mentioning that after harvesting the planted crops, the customer can use the harvested crops through the payment module 40 to pay fees to the farm manager, such as paying farmland lease fees and crop management fees. In other words, after the crops are harvested, the customer can pay the farm manager for the crop products through the payment module 40 to deduct the rental fee, farm management expenses, etc.

The information feedback module 31 of the crop management module 30 feeds back the crop information of the customer in the farm 100 to the farm manager or/and the customer, and the customer sends management control instructions to the cultivation management module 32, the growth management module 33, and the harvest management module 34 according to the crop information fed back by the information feedback module 31. The information feedback module 31 is implemented as a camera device or other information acquisition device installed on the farm, wherein the information of the crops of the farm acquired by the information feedback module 31 is fed back to customers and farm managers. It is understandable that the farm managers and the customers can observe the growing of crops in the farm in time through the information feedback module 31, so as to manage the crops in the farm in time when the crops need to be managed.

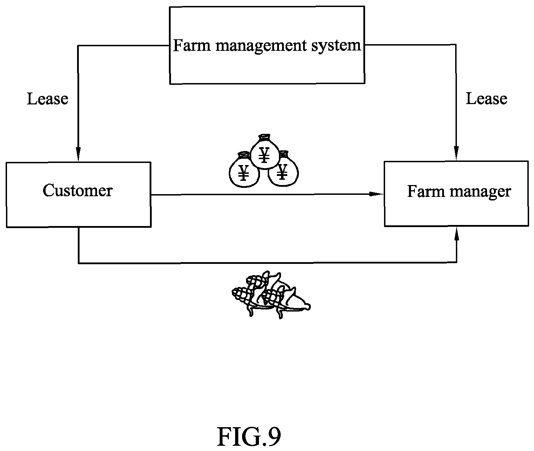

As shown in FIG. 9, the payment system 40 of the farm management system allows the customer to pay the farm manager's rental fees, farm management fees, crop planting, and harvesting fees during the lease of farmland. The payment system 40 further includes an expense deduction module 41 and an expense payment module 42, wherein the expense deduction module 41 allows the customer to deduct the crops obtained from the harvest to deduct the cost of the customer's lease of farmland and deduct the management cost of the farm manager. When renting, the customer can also pay a certain amount of renting expenses, crop management expenses, etc., to the farm manager in a lump sum or in installments through the expense payment module 42.

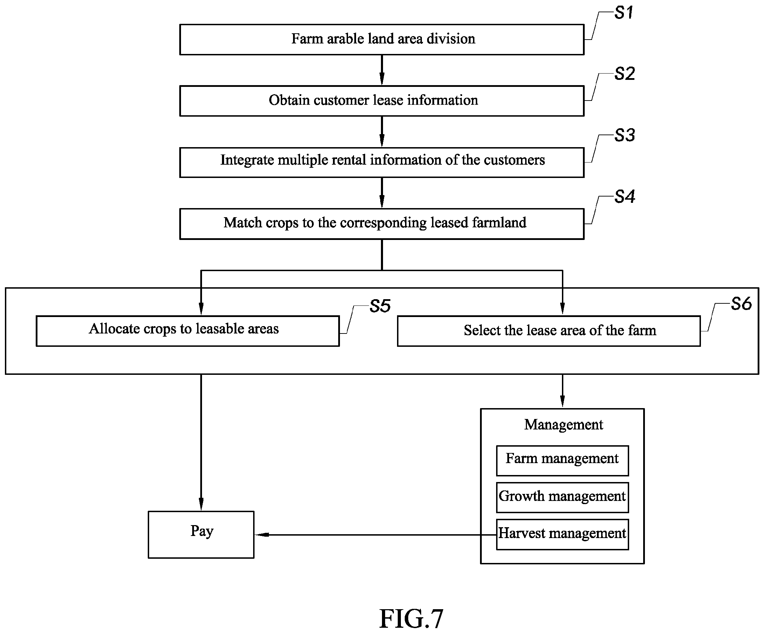

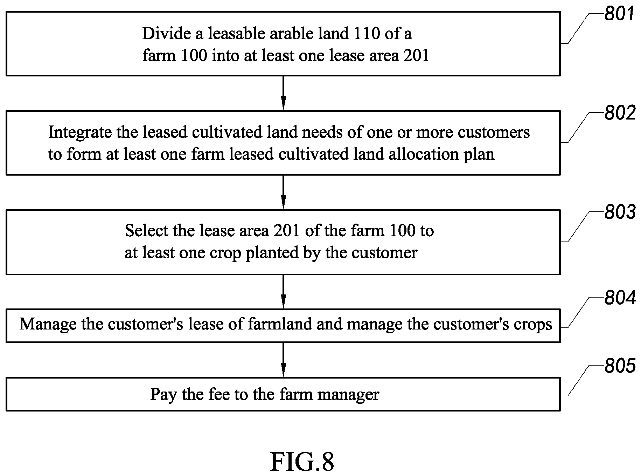

Referring to FIG. 7 and FIG. 8 of the specification of the present disclosure, the farm management system manages the lease procedure of the farm 100 as follows. The farm arable land area is divided into one or more lease areas, where any of the lease areas can be used to grow at least one crop. The farm management system automatically divides the lease area based on the data information and the crop information of the farm 100 provided by the farm manager; or the farm manager builds a lease area suitable for the growth of crops.

The customer's lease information must be obtained. The lease information acquisition module 21 of the farmland lease module 20 acquires the data and information on farmland leased by the customer. Integration of the rental data information of multiple customers, including the size of the lease area, the length of time, and the types of crops to be grown. The information integration module 22 integrates and calculates the needs of multiple customers for lease farmland according to the data information to be acquired by the lease information acquisition module 21 to analyze a reasonable farmland lease plan. The customer's crops are matched to the corresponding leased farmland in the farm 100. The farmland selection module 23 of the farm management system allocates at least one rentable area for the customer's crops based on the lease allocation plan integrated by the information integration module 22; or the customer selects the lease area in the farm 100.

Crops in the leased farmland in the farm 100 are managed. Crops in the lease area in the farm 100 are planted according to the types of crops designated by the customer and crops in the lease area are managed according to the customer's crop management instructions. The crop products in the leased farmland must finally be harvested. The planting and growth of crops are fed back to the customers or the farm managers, so that the customers and the farm managers can manage the growth of crops by observing the growing of crops.

As shown in FIG. 8, according to another aspect of the present disclosure, the present disclosure further provides a management method of a farm management system, wherein the management method includes the following method steps:
Step 801: divide a leasable arable land 110 of a farm 100 into at least one lease area 201;
Step 802: integrate the leased arable land needs of one or more customers to form at least one farm leased arable land allocation plan;
Step 803: select the lease area 201 of the farm 100 to at least one crop planted by the customer;
Step 804: manage the customer's lease of farmland and manage the customer's crops; and
Step 805: Pay the fee to the farm manager.

In the above management method, in the method 801, the arable land information of the farm 100 is acquired, and the lease area of the current farm is divided according to the type of arable land of the farm 100. Step 801 of the above method may further include the following steps: constructing the farm 100 to divide the lease area 201 of the farm 100, wherein the lease area 201 is at least suitable for planting at least one crop.

In the above management method, the method step 802 further includes:
Step 8021: obtain the lease demand of the customer for leased farmland, where the lease demand includes the area of the leased farmland, the lease time, and the types of crops to be planted; and
Step 8022: according to the farmland information of the lease area of the farm 100, integrate the leased farmland requirements of the multiple customers, and analyze the customer's crop planting plan.
In the above management method, the method step 803 further includes: allocating the crops required by the customer to be planted in the lease area 201 of the farm 100. Step 803 of the above method may further include the following steps: selecting the lease area 201 of the farm 100 to be suitable for the crops that the customer needs to grow.
In the above management method, the method step 804 further includes the following management method:
Step 8041: cultivate the crops designated by the customer to the customer's leased farmland area 201;
Step 8042: feedback the growth of the crops to the farm manager or customers, so that the customers and farm manager can manage the growth of the crops; and
Step 8043: harvest the corresponding crops in the lease area 201 of the customer.

In method step 805, it further includes:
8051: payment of renting farmland fees and farm management fees to farm manager; and
8052: deduct the crops harvested in the leased area to pay for farmland lease.

Those skilled in the art should understand that, the above description and the embodiments of the present disclosure shown in the drawings are only examples and do not limit the present disclosure. The purpose of the present disclosure has been completely and effectively achieved. The functions and structural principles of the present disclosure have been shown and explained in the embodiments. Without departing from the principles, the implementation of the present disclosure may have any deformation or modification.

## Claims

1. A farm management method comprises the following method steps:
(a) integrating at least one demand of a customer for lease land to form at least one allocation plan to lease land; and
(b) matching at least one lease area of a farm to at least one crop in the at least one demand, wherein the area is arable for the crop.

2. The farm management method according to claim 1, wherein before the step (a), the management method further comprises:
dividing a leasable and arable land of the farm into at least one of the lease areas.

3. The management method according to claim 2, the method further comprising:
acquiring information of arable land of the farm, and dividing a leasable area of the farm according to types of the arable land of the farm.

4. The management method according to claim 2, the method further comprising:
constructing the farm to divide the lease area of the farm, wherein the lease area is arable for growing at least one crop.

5. The management method according to claim 1, wherein in said step (a) further comprising:
obtaining lease demand of the customer, wherein the lease demand comprises the area of the lease land, lease time, and types of the crop; and
integrating the demand of a plurality of the customer for the arable land and analyzing the crop planting plans according to the information of the arable land of the farm.

6. The management method according to claim 1, wherein the step (b) further comprising:
allocating the crop in the demand of the customer to plant in the lease area of the farm.

7. The management method according to claim 1, wherein the step (b) further comprising:
selecting the lease area of the farm which is suitable for the demand of the customer for planting the crop.

8. The management method according to claim 1, the management method further comprising:
(c) managing the lease land of the customer and managing the crop grown by the customer; and
(d) paying fees to a manager of the farm.

9. The management method according to claim 8, wherein the step (c) further comprising:
(c.1) cultivating the crop designated by the customer to the lease area;
(c.2) feeding back growth of the crop to the manager or a requester of the demand, and managing a growth of the crops by the requester and the manager; and
(c.3) harvesting the crop in the leased area.

10. The management method according to claim 8, wherein the step (d) further comprising:
paying fees of the lease land and farm management to the manager; and
deducting the crop harvested from the leased area from the fees.

11. A farm management system, **characterized by** comprising:
a farm area management module, wherein the farm area management module provides at least one lease area formed after a farm is divided; and
a farmland lease module, wherein the farmland lease module integrates at least one demand for lease land, combines with type of arable land of the lease area where the farm is divided, and selects the lease area to meet demand of the crop planting of the lease land.

12. The farm management system according to claim 11, wherein the farm area management module receives information of arable land of the farm, and plans the lease area according to the information of the arable land; or constructs the farm to receive the planned lease area after the farm is constructed.

13. The farm management system according to claim 12, wherein the farm area management module further comprises:
an area division module, wherein the area division module divides the lease area according to the information of the arable land of the farm, wherein the area is arable for the crop; and
an area cultivation management module, wherein the area cultivation management module records the types of crops is arable in each lease area of the farm.

14. The farm management system according to claim 11, wherein the farmland lease module further comprises:
a lease information acquisition module, wherein the lease information acquisition module acquires information of the lease land of the customer, wherein the information of the lease land comprises the lease time, the leased land area, and the type of the crop grown;
an information integration module, wherein the information integration module integrates the information of the lease land acquired by the lease information acquisition module based on the information of the arable land, and derives at least one leased farmland plan; and
a farmland selection module, wherein the farmland selection module selects at least one lease area for the crop according to the leased farmland plan of the information integration module.

15. The farm management system according to claim 14, wherein the information integration module combines the information of the lease land acquired by the lease information acquisition module, analyzes the cultivation time of the crops, the area of the lease land and the planting matching relationship between the crops, to obtain the leased farmland plan.

16. The farm management system according to claim 14, wherein the farmland selection module further comprises a farmland allocation module and a farmland selection module, wherein the farmland allocation module allocates the lease land according to the demand of leased planting, wherein the farmland selection module allows the customer to select the lease area in the farm.

17. The farm management system according to claim 11, wherein the farm management system further comprises a crop management module, wherein the crop management module assists in managing the crops of the farm.

18. The farm management system according to claim 16, wherein the farm management system further comprises a crop management module, wherein the crop management module assists in managing the crops of the farm.

19. The farm management system according to claim 18, wherein the crop management module further comprises an information feedback module, wherein the information feedback module feeds back information of crop planting and growth to manager or the customer, and the customer learns about the crops growth, and manages the growth of the crops.

20. The farm management system according to claim 11, wherein the crop management module further comprises a payment module, wherein the customer who leases the arable land pays fees to the manager through the payment module.

21. The farm management system according to claim 20, wherein the payment module further comprises an expense payment module and an expense deduction module, wherein the fee payment module allows the customer to pay the fees to the manager, wherein the expense deduction module allows the customer to deduct expenses by paying for the crops.
